# EUROPÄISCHE PATENTSCHRIFT

(11) **EP 3 040 830 B1**
(45) Veröffentlichungstag und Bekanntmachung des Hinweises auf die Patenterteilung: **07.08.2019**
(21) Anmeldenummer: 15150034.5
(22) Anmeldetag: 02.01.2015
(51) Int. Cl.: G06F 3/0481, B60K 35/00, B60K 37/06

(54) **Anwenderschnittstelle für ein Fortbewegungsmittel und Verfahren zur Anzeige von Informationen über Zustände von Fahrzeugkomponenten**
User interface for a means of locomotion and method for displaying information about states of vehicle components
Interface utilisateur pour un moyen de déplacement et procédé d'affichage d'informations concernant les états des composants du véhicule

(43) Veröffentlichungstag der Anmeldung: 06.07.2016
(73) Patentinhaber: Volkswagen AG, 38436 Wolfsburg (DE)
(72) Erfinder: Wild, Holger, 10179 Berlin (DE); Kötter, Nils, 38126 Braunschweig (DE)
(74) Vertreter: Hoefer & Partner Patentanwälte mbB

(56) Entgegenhaltungen:
- WO-A1-2009/046095
- DE-A1-102013 021 978
- US-A1- 2006 241 793
- US-A1- 2012 320 080

## Beschreibung

### Stand der Technik

Die vorliegende Erfindung betrifft ein Fortbewegungsmittel, eine Anwenderschnittstelle und ein Verfahren zur Anzeige von Informationen über Zustände von Komponenten eines Fortbewegungsmittels. Insbesondere betrifft die vorliegende Erfindung einen verbesserten Schnellzugriff auf weiterführende Informationen zu einer von einem Anwender gewählten Komponente des Fortbewegungsmittels.

Aktuelle Fortbewegungsmittel (nachfolgend "Fahrzeuge") verfügen über eine immer größer werdende Anzahl diagnosefähiger Komponenten und Funktionen. Sofern die ermittelten Informationen und Zustände für den Anwender aufzubereiten und dargestellt werden sollen, wird die Komplexität der zugehörigen Darstellungsformen, "Setups" und Einstellungsmenüs immer größer. Für hierarchisch gegliederte Menüs bedeutet die zunehmende Vielzahl anzuzeigender Informationen eine entsprechende Vielzahl von Untermenüs, über welche der Anwender die Diagnosefunktionen einsehen und gegebenenfalls Einfluss auf die entsprechenden Einstellungen nehmen kann.

DE 199 41 953 A1 offenbart eine Vorrichtung zur Darstellung von Fahrzeugzuständen eines Kraftfahrzeugs, bei welcher neben einer Draufsicht auf ein Fahrzeugmodell unterschiedliche Hinweise zu aktuellen Fahrzeugzuständen durch Piktogramme angezeigt werden. Beispielsweise werden nahe den Reifen aktuelle Zahlenwerte repräsentierend Reifendrücke und deren Abweichung von einem Sollwert angezeigt.

DE 10 2007 014 530 A1 offenbart eine Vorrichtung zum Anzeigen von Zuständen von Einrichtungen eines Fahrzeugs (z.B. Flüssigkeitstanks), bei welcher ein dreidimensionales Oberflächenhüllenmodell des Fortbewegungsmittels und fotorealistische Darstellungen einzelner Komponenten in teiltransparenten Ansichten des Fahrzeugmodells um Zahlenwerte ergänzt und Flüssigkeitsstände visualisiert werden. Zudem wird vorgeschlagen, aktuelle Anordnungen der Fahrzeugeinrichtungen in den Bilddaten des Fahrzeugmodells berücksichtigt werden.

DE 10 2013 021 978 A1 offenbart ein Verfahren zur augmentierten Darstellung eines realen Bedienelementes, bei welchem der Anwender mittels einer Kamera Bereiche seines Fortbewegungsmittels aufnimmt, um zusätzliche Informationen zu diesen angezeigt zu bekommen. In erster Linie wird hierbei der Ansatz verfolgt, virtuelle Bedienelemente auf der Anzeigeeinheit eines die Kamera umfassenden Drahtlosanwenderendgerätes darzustellen und durch den Anwender zu bedienen. Zudem wird vorgeschlagen, Anzeigen von Statusdaten des Fahrzeugs im Ausgabebild in Form virtueller Schilder oder Fähnchen auszugeben. Die virtuellen Schilder oder Fähnchen werden perspektivisch korrekt zum Fahrzeug als 2D- oder 3D-Menüs ausgegeben. Durch die Verwendung einer Kamera eines mobilen Endgerätes kann der Anwender das reale Fahrzeug umlaufen, wobei dann fortlaufend eine dynamische Anpassung der ausgegebenen virtuellen Zusatzinformationen erfolgt.

US 2006/0241793 A1 offenbart eine Anwenderschnittstelle für ein Steuerungssystem für Ölbohrplattformen. Sofern eine Problemstelle innerhalb der Ölbohrplattform identifiziert wird, erfolgt ein automatischer Zoom innerhalb einer Darstellung der Ölbohrplattform. Optional werden Texterläuterungen (Log) bzgl. der Problemstelle auf der Anzeigeeinrichtung angezeigt. Zur Anpassung einer Perspektive auf das Modell der Ölbohrplattform ist weiter eine Rotation des angezeigten Modells im Ansprechen auf eine Anwendergeste vorgesehen.

US 2012/0320080 A1 offenbart ein System zur virtuellen Begehung eines Fahrzeugs. Das System fokussiert eine Verwendung von Gestenerkennung und Erkennung von Körperhaltungen zur virtuellen Begehung eines Fahrzeugs.

Für eine rasche, wahlfreie und intuitive Navigation zu Informationen/Hinweisen über Zustände einzelner Komponenten eines Fortbewegungsmittels stellt die Technik keine zufriedenstellende Lösung bereit. Es ist daher eine Aufgabe der vorliegenden Erfindung, den vorstehend identifizierten Bedarf zu stillen.

### Offenbarung der Erfindung

Die vorstehend genannte Aufgabe wird erfindungsgemäß durch ein Verfahren zur Anzeige von Informationen über Zustände von Komponenten eines Fortbewegungsmittels gemäss Anspruch 1 gelöst. Das Fortbewegungsmittel kann beispielsweise ein PKW, ein Transporter, ein LKW, ein Motorrad, ein Luft- und/oder Wasserfahrzeug sein. Unabhängig davon wird der Einfachheit halber in der nachfolgenden Beschreibung von einem "Fahrzeug" bzw. einem "Fahrzeugmodell" gesprochen, auch wenn diese Begriffe lediglich stellvertretend für ein Fortbewegungsmittel bzw. ein Fortbewegungsmittelmodell stehen. In einem ersten Schritt wird ein dreidimensionales Fahrzeugmodell des Fahrzeugs angezeigt. Dies kann beispielsweise auf einer zweidimensionalen Anzeigeeinheit geschehen, welche z.B. als Matrix-Anzeige (gegebenenfalls durch Erweiterung um eine berührungsempfindliche Oberfläche auch als "Touch-Screen" bezeichnet) ausgestaltet sein kann. Zudem werden Informationen über Zustände von Komponenten des Fahrzeugs ermittelt, welche sich beispielsweise durch ihre Relevanz für den Anwender auszeichnen. Diese Informationen können beispielsweise über ein Bus-System des Fahrzeugs kommuniziert und erfindungsgemäß ausgelesen werden. Erfindungsgemäß werden außerhalb des Fahrzeugmodells angeordnete Hinweise zu den Informationen angezeigt. Die Hinweise können beispielsweise Piktogramme ("Symbole") und/oder Messwerte und/oder Hinweistexte umfassen. Selbstverständlich kann der Hinweis selbst als Schaltfläche zur Entgegennahme von Befehlen zur Anpassung einer Funktion der Komponente oder zur Anzeige weiterführender Informationen ausgestaltet sein. Zur Sicherstellung der Übersichtlichkeit ist ihre Anzeige außerhalb des Fahrzeugmodells besonders hilfreich. Um jedoch den optischen und inhaltliche Bezug zu der durch sie charakterisierten Komponente herzustellen bzw. zu sichern, werden optionale Bezugslinien zwischen den Hinweisen und denjenigen Positionen innerhalb des Fahrzeugmodells vorgeschlagen, an welchen die den Hinweisen jeweils zugeordneten Komponenten angeordnet sind. Dies schließt nicht aus, dass die jeweilige Komponente zusätzlich ebenfalls grafisch dargestellt wird. Anschließend wird eine Anwendergeste zur Drehung der Darstellung des Fahrzeugmodells empfangen. Diese umfasst eine Wischgeste (als zweidimensionale Wischgeste unter Kontakt mit einer berührungsempfindlichen Oberfläche oder als dreidimensionale Wischgeste frei im Raum), welche sich auf das Fahrzeugmodell bezieht. Mit anderen Worten wird die Anwendergeste als Wunsch des Anwenders interpretiert, eine Perspektive auf das Fahrzeugmodell zu verändern. Im Ansprechen darauf werden das Fahrzeugmodell, die Hinweise und die Bezugslinien um einen identischen Winkelbereich (z.B. um einen identischen Punkt im Bereich der Mitte des Fortbewegungsmittels oder um einen Punkt durch die Hochachse des Fortbewegungsmittels) gedreht. Mit anderen Worten rotiert die gesamte Darstellung in Abhängigkeit der Anwendergeste derart, dass der Anwender eine geeignete Perspektive auf diejenigen Hinweise und/oder Komponenten erhält, welche ihn aktuell am meisten interessieren. Die räumliche Zuordnung zwischen der jeweiligen Komponente und dem Hinweis, welches über die Zustände der Komponente informiert, bleibt erfindungsgemäß vollständig erhalten und verbessert die Orientierung des Anwenders in der Darstellung. Anstatt durch eine Vielzahl von komponentenbezogenen Einstellungsmenüs repräsentierend unterschiedliche Funktionscluster zu navigieren, kann der Anwender eine Vielzahl, insbesondere sämtliche, Komponenten und Meldungen über die erfindungsgemäße Anwenderschnittstelle anzeigen lassen, Informationen einsehen und gegebenenfalls zusätzliche Informationen aufrufen. Optional kann auch der Zugriff auf Einstellungsfunktionen auf Basis der erfindungsgemäßen Anzeige vereinfacht werden.

Die Unteransprüche zeigen bevorzugte Weiterbildungen der Erfindung.

Bevorzugt können die Hinweisfelder auf einer gemeinsamen virtuellen Kugeloberfläche angeordnet sein, welche das Fahrzeugmodell umgibt. Mit anderen Worten sind die Hinweise bezüglich eines gemeinsamen Punktes identisch beabstandet, welcher insbesondere auf einer Achse zur Drehung der Perspektive auf das Fahrzeugmodell liegen kann. Insbesondere fallen dieser Bezugspunkt der Hinweisfelder und der Drehpunkt zur Anpassung der Perspektive des Fortbewegungsmittels-Modells zusammen. Dies vereinfacht die Orientierung des Betrachters sowie eine rechentechnische Erzeugung der erfindungsgemäß vorgeschlagenen Darstellung.

Bevorzugt kann die gemeinsame virtuelle Kugeloberfläche (auf welcher sich die Hinweise befinden), optisch hervorgehoben werden. Dies kann beispielsweise durch eine teilweise transparente Darstellung der Kugeloberfläche zumindest in einzelnen Bereichen der Anzeige realisiert werden. Beispielsweise können auch Glanz- und/oder Spiegeleffekte dafür sorgen, dass die virtuelle Kugeloberfläche optisch erkennbar wird. Dies vereinfacht die Orientierung des Anwenders, indem sie mögliche zukünftige Positionen für die erfindungsgemäß angezeigten Hinweise beschreibt.

Um die Anzeige optisch zu beruhigen und erst im Bedarfsfall die erforderlichen Hinweise auszugeben, kann erfindungsgemäß vorgesehen sein, eine Annäherung eines Anwenders in einem ersten Annäherungsbereich zu erfassen. Dies kann beispielsweise mit Hilfe eines optischen Sensors und/oder mit Hilfe eines kapazitiven Sensors erfolgen. Im Rahmen der vorliegenden Erfindung wird unter einer "Annäherung" eine solche Handlung bzw. Anwenderinteraktion verstanden, welche vollständig ohne Kontakt mit einer berührungsempfindlichen Oberfläche eines Bildschirms und bevorzugt ohne jeglichen Kontakt mit einer Fahrzeugstruktur vorgenommen wird. In einer Ausgestaltung werden erst im Ansprechen auf die erfasste Annäherung die außerhalb des Fahrzeugmodells befindlichen Hinweise angezeigt. Entsprechendes gilt optional für die Bezugslinien. Somit kann das erfindungsgemäß angezeigte Fahrzeugmodell in Situationen ohne entsprechenden Informationsbedarf des Anwenders in einer ästhetisch ansprechenden und puren Erscheinungsform angezeigt und erst im Ansprechen auf einen geäußerten Informationsbedarf des Anwenders um die erfindungsgemäßen Hinweise ergänzt werden.

Bevorzugt kann auch eine Annäherung eines Anwenders in einem zweiten Annäherungsbereich erfasst werden. Insbesondere ist der zweite Annäherungsbereich stellvertretend für ein konkreteres Interesse des Anwenders bezüglich einzelner Hinweise. Hierzu kann der zweite Annäherungsbereich beispielsweise zwischen dem ersten Annäherungsbereich und einer Anzeigeeinrichtung angeordnet sein. Insbesondere sind die beiden Annäherungsbereiche nicht überlappend, bevorzugt jedoch aneinandergrenzend angeordnet. Im Ansprechen auf die fortgeschrittene Annäherung des Anwenders in den zweiten Annäherungsbereich werden dem zweiten Annäherungsbereich zugeordnete Hinweise zu den Zuständen des Fahrzeugs optisch hervorgehoben. Insbesondere kann also der zweite Annäherungsbereich segmentiert sein, so dass die Annäherung an einen vordefinierten Bereich einer Anzeigeeinrichtung, auf welcher das Fahrzeugmodell dargestellt wird, einer vordefinierten Anzahl von Hinweisen zugeordnet wird, welche kleiner als die Vielzahl sämtlicher aktuell angezeigter Hinweise ist. Das optische Hervorheben, welches beispielsweise ein Invertieren der optischen Darstellung der Hinweise oder das Anpassen eines Rahmens um den Hinweis oder das Anpassen einer Hintergrundfarbe des Hinweises umfassen kann, verbessert die optische Orientierung des Anwenders und kann auch ohne eine Wischgeste zur Drehung des Fahrzeugmodells die Lesbarkeit bzw. den Kontrast einzelner Hinweise erhöhen und die mit einer Drehung des Fahrzeugmodells verbundene Unruhe und erforderliche Neuorientierung des Anwenders erübrigen.

Die Hinweise können beispielsweise als virtuelle zweidimensionale Projektionen auf einer jeweiligen oder einer gemeinsamen virtuellen Projektionsfläche dargestellt werden. Hierbei kann insbesondere die vorgenannte virtuelle Kugeloberfläche als Projektionsfläche verwendet werden. Die Darstellung der Hinweise als Projektionen, deren Ursprung im Fahrzeugmodell verortet ist, ermöglichen eine besonders natürliche und die Orientierung des Anwenders unterstützende Darbietung von Informationen.

Unabhängig von einer aktuellen Annäherung und/oder Perspektive auf das Fahrzeugmodell können erfindungsgemäß kritische Zustände von Komponenten des Fahrzeugs ermittelt werden und im Ansprechend darauf Hinweise zu den kritischen Zuständen der jeweiligen Komponente angezeigt bzw. hervorgehoben werden. Dieses Anzeigen bezieht sich auf einen Zustand, in welchem zumindest für die betrachtete Komponente bislang kein Hinweis angezeigt wurde. Das Hervorheben kann beispielsweise für bereits zuvor dargestellte Hinweise erfolgen, um dem Anwender die Dringlichkeit einer Reaktion oder zumindest einer Kenntnisnahme zu verdeutlichen. Beispielsweise kann der Hinweis eine Signalfarbe und/oder eine Animation und/oder eine veränderte Darstellungsgröße erhalten, um ihn von anderen Hinweisen unterscheiden zu können.

Die erfindungsgemäß angezeigten Hinweise können auch zur Entgegennahme von Anwendereingaben (beispielsweise unter Berührung einer berührungsempfindlichen Oberfläche einer Anzeigevorrichtung) vorgesehen sein, wodurch der Anwender in ein dem Hinweis bzw. der entsprechenden Komponente zugeordnetes Untermenü gelangt. Das Untermenü kann ein modifiziertes Fahrzeugmodell aufweisen, in welchem dem Hinweis zugeordnete Komponenten gegenüber übrigen Komponenten optisch hervorgehoben werden. Beispielsweise können die Komponenten eine geringere Transparenz als die übrigen Komponenten (und insbesondere die Außenhaut des Fahrzeugs) aufweisen oder gänzlich intransparent dargestellt werden. Selbstverständlich kann auch der Hinweis selbst als Schaltfläche zur Entgegennahme von Befehlen zur Anpassung einer Funktion der Komponente ausgestaltet sein. Das erfindungsgemäß vorgeschlagene Untermenü bietet demgegenüber eine vergrößerte Informationstiefe und eine größere Vielzahl von Einflussnahmemöglichkeiten durch entsprechende Schaltflächen.

Zur Verbesserung des informativen Bezuges zwischen dem Fahrzeug des Anwenders und dem erfindungsgemäß dargestellten Fahrzeugmodell kann ein aktueller Zustand und/oder eine aktuelle Konfiguration des Fahrzeugs sensorisch erkannt und zur Auswahl dem Zustand zugeordneten Bildmaterials zur Erzeugung des Fahrzeugmodells verwendet werden. Beispielsweise kann der Öffnungszustand einer Tür / eines Fensters / einer Heckklappe / eines Schiebedachs / einer Motorhaube o.ä., ebenso wie der Betriebszustand eines Lichts / eines Warnblinkers / eines Fahrtrichtungsanzeigers sowie ein Lenkeinschlag durch das Fahrzeugmodell berücksichtigt und wiedergegeben werden. Dies bietet den Vorteil, dass ein unklarer Bezug zwischen einem erfindungsgemäß dargestellten Hinweis und einer ihm zugeordneten Komponente mitunter dadurch durch den Anwender aufgelöst werden kann, dass er einen tatsächlichen Zustand seines Fahrzeugs herstellt, in dessen modellhafter Darstellung der Blick auf die zugeordnete Komponente und ihr Bezug zum aktuell dargestellten Hinweis besser erkennbar ist. Insbesondere eine im Wesentlichen intransparente Außenhaut des Fortbewegungsmittels kann beispielsweise durch das Öffnen einer Tür den Blick auf im Innenraum angeordnete Komponenten freigeben.

Die Komponente, deren Zustand erfindungsgemäß durch Hinweise veranschaulicht wird, kann beispielsweise einen Reifen bzw. ein Rad, eine Traktionsmaschine (ein Verbrennungsmotor und/oder eine E-Maschine) und/oder ein Leuchtmittel und/oder eine Zugangsvorrichtung (Tür, Heckklappe, Schiebedach, Panoramadach, o.ä.) und/oder eine Seitenscheibe und/oder einen Außenspiegel umfassen. Die vorgenannten Komponenten sind einerseits (mehrfach) diagnosefähig und andererseits ist ihr Zustand für den Fahrer oder andere Anwender mitunter von erheblicher Relevanz.

Beispiele für Informationen in den Hinweisen sind ein Reifendruck (Ist/Soll-Druck), ein Öffnungszustand, ein Betriebszustand und/oder ein Funktionsfehler.

Gemäß einem zweiten Aspekt der vorliegenden Erfindung wird ein Computerprogrammprodukt (z.B. ein Datenspeicher) vorgeschlagen, auf welchem Instruktionen gespeichert sind, die einen programmierbaren Prozessor (z.B. einer Anwenderschnittstelle gemäß der vorliegenden Erfindung) in die Lage versetzen, die Schritte eines Verfahrens gemäß dem vorgenannten Erfindungsaspekt durchzuführen. Das Computerprogrammprodukt kann beispielsweise als CD, DVD, Blueray-Disc, Flash-Speicher, Festplatte, RAM/ROM, Cache, etc., ausgestaltet sein.

Gemäß einem dritten Aspekt der vorliegenden Erfindung wird eine Signalfolge, repräsentierend Informationen vorgeschlagen, welche eine programmierbaren Prozessor (z.B. einer Anwenderschnittstelle gemäß der vorliegenden Erfindung) in die Lage versetzen, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Gemäß einem vierten Aspekt der vorliegenden Erfindung wird eine Anwenderschnittstelle für ein Fortbewegungsmittel vorgeschlagen. Diese umfasst eine Anzeigeeinrichtung (z.B. ein Bildschirm, insbesondere ein Touch-Screen) zur Anzeige von Informationen über Zustände von Komponenten des Fortbewegungsmittels. Auch kann die Anzeigeeinrichtung mehrere einzelne Bildschirme/Touch-Screens aufweisen. Eine Erfassungseinrichtung ist zur Erfassung von Anwendereingaben (zweidimensionale und/oder dreidimensionale Eingaben) vorgesehen. Die Erfassungseinrichtung kann beispielsweise eine berührungsempfindliche Oberfläche einer Anzeigeeinrichtung und/oder kapazitive und/oder optische Sensoren umfassen, mittels welcher z.B. Tipp- und/oder Wischgesten des Anwenders aufgelöst und an eine Auswerteeinheit der Anwenderschnittstelle gemeldet werden können. Die Auswerteeinheit kann beispielsweise einen programmierbaren Prozessor und/oder ein elektronisches Steuergerät umfassen. Durch die vorstehend genannten Komponenten ist die erfindungsgemäße Anwenderschnittstelle eingerichtet, ein Verfahren gemäß dem erstgenannten Erfindungsaspekt auszuführen.

Gemäß einem fünften Aspekt der vorliegenden Erfindung wird ein Fortbewegungsmittel (z.B. ein PKW, ein Transporter, ein LKW, ein Motorrad, ein Luft- und/oder Wasserfahrzeug) vorgeschlagen, welches eine Anwenderschnittstelle gemäß dem viertgenannten Erfindungsaspekt umfasst. Dabei kann die Anwenderschnittstelle insbesondere für den Führer des Fortbewegungsmittels vorgesehen sein, mittels welcher er während der Führung des Fortbewegungsmittels mit dem Fortbewegungsmittel und seinen technischen Einrichtungen kommunizieren kann. Die Merkmale, Merkmalskombinationen und die sich aus diesen ergebenden Vorteile des zweitgenannten, drittgenannten, viertgenannten und fünftgenannten Erfindungsaspekts entsprechen denjenigen des erfindungsgemäßen Verfahrens derart ersichtlich, dass zur Vermeidung von Wiederholungen auf die obigen Ausführungen verwiesen wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht auf Komponenten eines Ausführungsbeispiels eines erfindungsgemäßen Fortbewegungsmittels mit einem Ausführungsbeispiel einer erfindungsgemäßen Anwenderschnittstelle;
- Figur 2: eine erste Bildschirmansicht eines Ausführungsbeispiels einer erfindungsgemäßen Anwenderschnittstelle;
- Figur 3: eine zweite Bildschirmansicht eines Ausführungsbeispiels einer erfindungsgemäßen Anwenderschnittstelle;
- Figur 4: eine dritte Bildschirmansicht eines Ausführungsbeispiels einer erfindungsgemäßen Anwenderschnittstelle;
- Figur 5: eine vierte Bildschirmansicht eines Ausführungsbeispiels einer erfindungsgemäßen Anwenderschnittstelle;
- Figur 6: eine fünfte Bildschirmansicht eines Ausführungsbeispiels einer erfindungsgemäßen Anwenderschnittstelle; und
- Figur 7: ein Flussdiagramm veranschaulichend Schritte eines Ausführungsbeispiels eines erfindungsgemäßen Verfahrens.

### Ausführungsformen der Erfindung

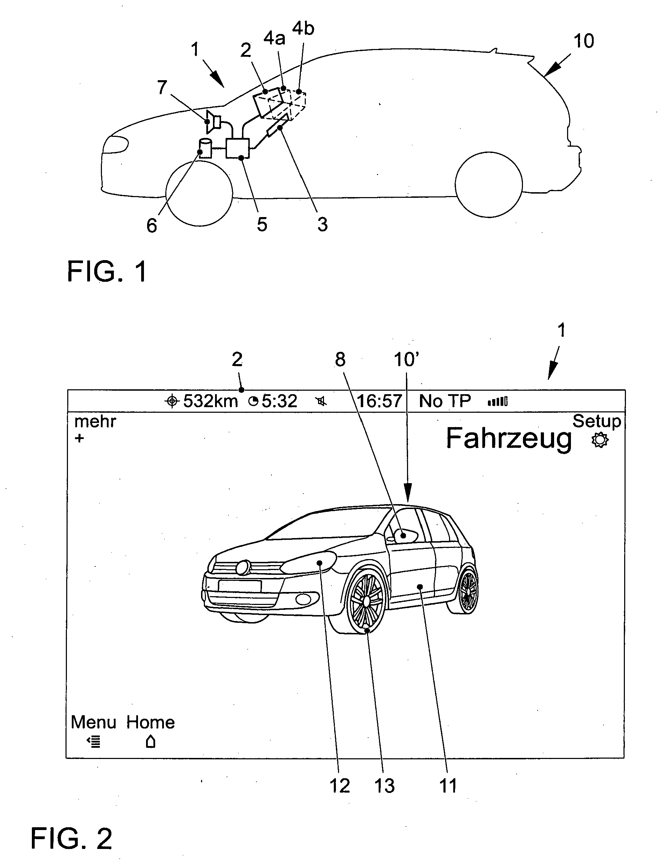

Figur 1 zeigt einen PKW 10 als Fortbewegungsmittel, in welchem Komponenten eines Ausführungsbeispiels einer erfindungsgemäßen Anwenderschnittstelle 1 permanent verbaut sind. Vor einem Bildschirm 2 als Anzeigeeinrichtung sind zwei gestrichelte Parallelepipede als erster Annäherungsbereich 4b und zweiter Annäherungsbereich 4a dargestellt, wobei der zweite Annäherungsbereich 4a (nicht dargestellte) Segmente aufweist, welche sich auf nebeneinander angeordnete Flächenbereiche des Bildschirms 2 beziehen. Mit anderen Worten können die Annäherungsgesten im zweiten Annäherungsbereich 4a genauer aufgelöst werden, als im erste Annäherungsbereich 4b. Aufgespannt werden die Annäherungsbereiche 4a, 4b durch eine Infrarot-LED-Leiste 3, welche ebenso wie der Bildschirm 2 informationstechnisch mit einem elektronischen Steuergerät 5 als Auswerteeinheit verbunden ist. Ein Datenspeicher 6 als Computerprogrammprodukt ist informationstechnisch mit dem elektronischen Steuergerät 5 verbunden, um die Instruktionen zur Ausführung eines erfindungsgemäßen Verfahrens ebenso wie Referenzen zur Erkennung von Tipp- und/oder Wischgesten zur Auswertung von Anwendereingaben bereitzuhalten. Schließlich ist auch ein Lautsprecher 7 zur Ausgabe von Hinweistönen informationstechnisch mit dem elektronischen Steuergerät 5 verbunden, um einzelne Anwenderinteraktionen akustisch zu untermalen und/oder Hinweise zur Bedienung zu geben.

Figur 2 zeigt eine erste Bildschirmansicht (englisch: "screenshot") auf einem Bildschirm 2 einer Anwenderschnittstelle 1, auf welchem ein perspektivisches Abbild eines PKWs 10 (s. Figur 1) in Form eines Fahrzeugmodells 10' drehbar dargestellt wird. Eine Drehung des Fahrzeugmodells 10' kann beispielsweise durch Ausführung von Wischgesten auf dem Bildschirm 2 oder in den Annäherungsbereichen 3a, 3b veranlasst werden. In einer aktuellen Perspektive auf das Fahrzeugmodell 10' sind ein linker Außenspiegel 8, ein linker Scheinwerfer 12, ein linkes Vorderrad 13 und die Fahrertür 11 erkennbar. Betriebszustände und weiterführende Informationen zu diesen Komponenten können also in einfacher Weise veranschaulicht werden, während auf der rechten Fahrzeugseite oder im Bereich des Fahrzeughecks angeordnete Komponenten und deren Zustände erst durch eine Drehung des Fahrzeugmodells 10' sichtbar werden.

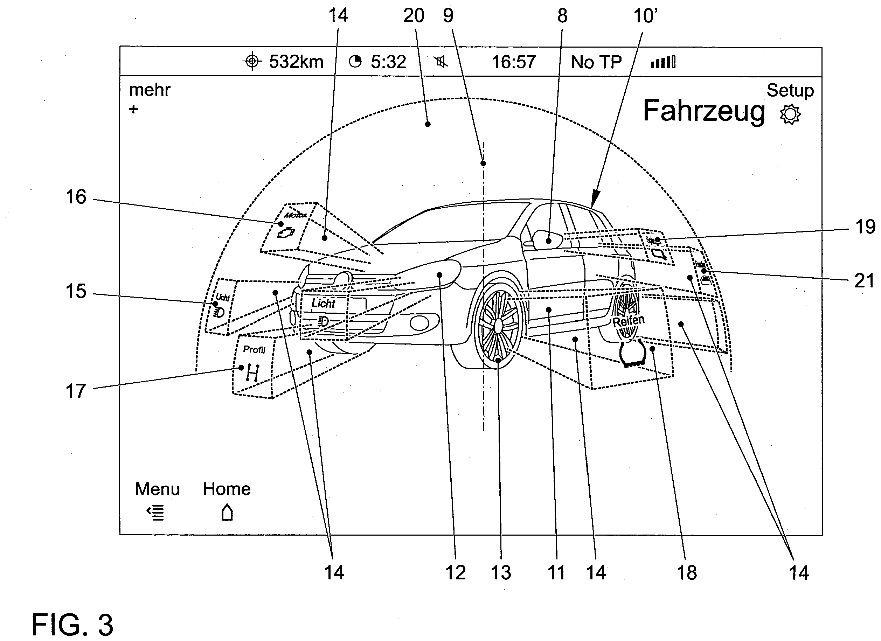

Figur 3 zeigt das Resultat einer ersten Annäherung eines Anwenders an eine Anwenderschnittstelle 1, nachdem die Bildschirmansicht gemäß Figur 2 dargestellt worden ist. Das Fahrzeugmodell 10' ist durch eine mit dem Fahrzeugmodell 10' im Wesentlichen konzentrischen Glaskugel 20 als virtuelle Kugeloberfläche bzw. Projektionsfläche umgeben, auf welcher vom Fahrzeugmodell 10' ausgehende Lichtstrahlen Projektionen als Hinweise 15, 16, 17, 18, 19, 21 zu den Komponenten Abblendlicht, Motorsteuergerät, Reifenprofil, Reifendruck, Außenspiegel und Fensterheber durch Piktogramme und Text erzeugen. Die Hinweise 15, 16, 17, 18, 19, 21 sind über Lichtstrahlen 14 umfassend anspruchsgemäße Bezugslinien mit originären Positionen entsprechender Komponenten im Fahrzeugmodell 10' verbunden. Es wird also angedeutet, bezüglich welcher Position im Fahrzeugmodell 10' ein jeweiliger Hinweis 15, 16, 17, 18, 19, 21 Informationen darstellt. Eine Wischgeste bezüglich der dargestellten Anzeige führt zu einer Rotation des Fahrzeugmodells 10', der Strahlen 14 und der Hinweise 15, 16, 17, 18, 19, 21 um einen im Bereich einer mittleren Hochachse 9 des Fahrzeugmodells 10' gelegenen Punkt. Auf diese Weise können auch in einer aktuellen Ansicht schlecht erkennbare Hinweise 15, 16, 17, 18, 19, 21 für den Anwender komfortabel optisch erfassbar und gegebenenfalls bedienbar dargestellt werden.

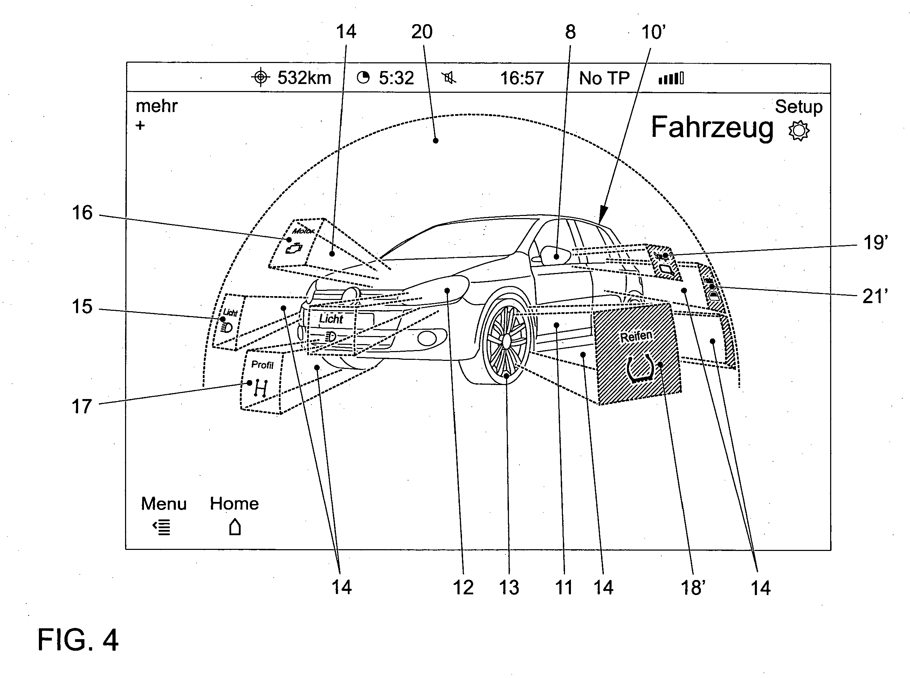

Figur 4 zeigt ausgehend von einer ersten Annäherung gemäß Figur 3 das Ergebnis einer Annäherung des Anwenders in einem zweiten Annäherungsbereich 4a, wobei die Hand die Anwenders vor einer rechten Hälfte der Bildschirmansicht angeordnet wird. Im Ansprechen darauf werden die Hinweise 18, 19, 21 durch eine schwarze Hintergrundfarbe hinsichtlich ihres Kontrastes verstärkt dargestellt. Dies erhöht die Erkennbarkeit der enthaltenen Informationen für den Anwender, so dass dieser entscheiden kann, ob die Informationen für ihn relevant sind und/oder eine Wischgeste zur weiteren Optimierung einer Perspektive auf die Hinweise 18', 19', 21' hilfreich ist. Eine alternative Interpretation der Darstellung gemäß Figur 4 ist unabhängig von einer erfassen Annäherung für den Fall möglich, dass der Reifendruck, der Spiegel- und Fensterheberzustand anhand vordefinierter Referenzen als kritisch einzustufen sind und die Hinweise 18', 19', 21' daher durch Einfärbung ihres Hintergrundes optisch gegenüber übrigen Hinweisen 15, 16, 17 hervorgehoben werden (ohne dass eine Annäherungsgeste in einem zweiten Annäherungsbereich hierfür ursächlich sein muss).

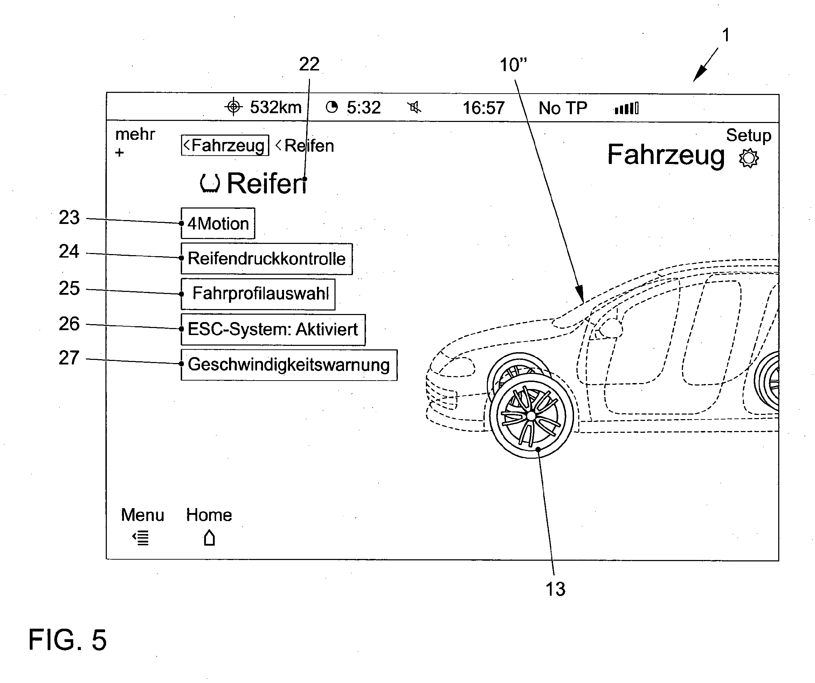

Figur 5 zeigt das Ergebnis einer Betätigung des Hinweises 18' in Figur 4, im Ansprechen worauf ein Untermenü 22 zum Thema "Reifen" aufgerufen wurde. Mit anderen Worten wurde eine Schaltfläche in Form des Hinweises 18' betätigt, im Ansprechen worauf die Darstellung des Fahrzeugmodells 10' in eine überwiegend transparente Darstellung eines Fahrzeugmodells 10" mit im Wesentlichen unveränderter optischer Darstellung der Reifen 13 abgeändert wurde. Zudem werden Schaltflächen 23, 24, 25, 26, 27 zu unterschiedlichen Funktionsumfängen der Funktionsfamilie "Reifen" angezeigt.

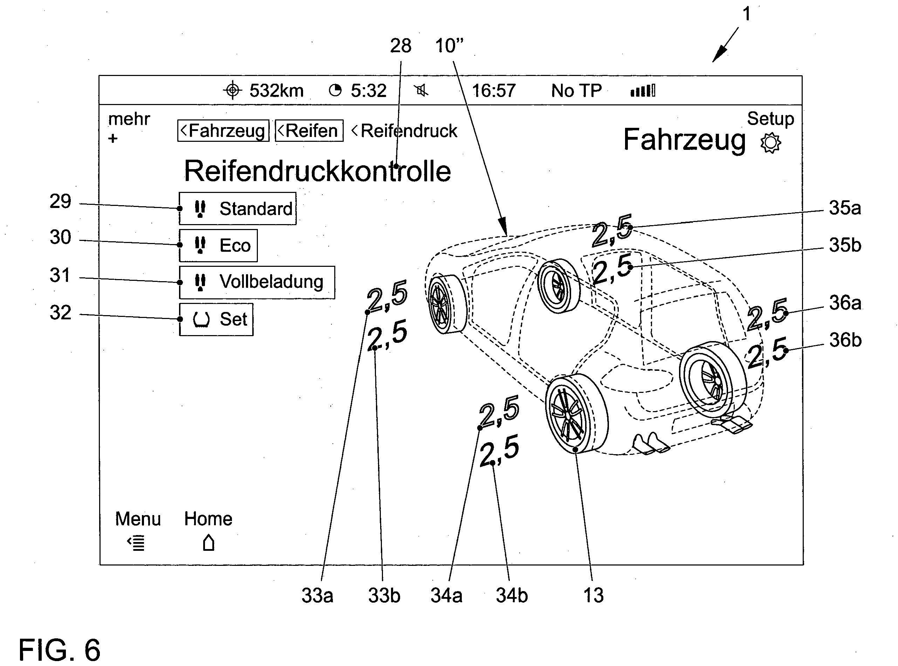

Figur 6 zeigt das Resultat einer Anwenderinteraktion bezüglich der Schaltfläche 24 ("Reifendruckkontrolle") in Figur 5, im Ansprechen worauf ein weiteres Untermenü 28 zum Themenbereich "Reifendruckkontrolle" mit weiteren Schaltflächen 29, 30, 31, 32 und einer erneut modifizierten Darstellung des Fahrzeugmodells 10" dargestellt wird. Eine perspektivische Darstellung des Fahrzeugmodells 10" ermöglicht eine zeitgleiche Anzeige von Zahlenwerten repräsentierend einen Solldruck 33a, 34a, 35a, 36a der Fahrzeugbereifung sowie Zahlenwerte, repräsentierend einen Ist-Druck 33b, 34b, 35b, 36b der Fahrzeugbereifung. Die Zahlenwerte sind auf einer vertikalen und durch die Achsen der Räder verlaufenden unsichtbaren und imaginären Fläche dargestellt.

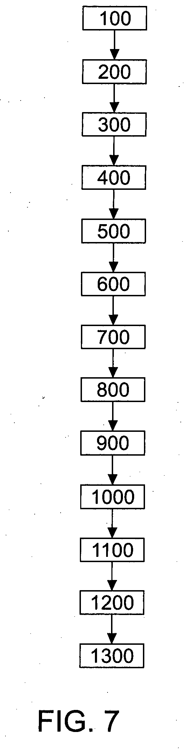

Figur 7 zeigt Schritte eines Ausführungsbeispiels eines erfindungsgemäßen Verfahrens zur Anzeige von Informationen über Zustände von Komponenten eines Fortbewegungsmittels. In Schritt 100 werden Informationen über Zustände von Komponenten des Fortbewegungsmittels ermittelt. In Schritt 200 wird ein dreidimensionales bzw. "perspektivisches" Modell des Fortbewegungsmittels auf einer Anzeigeeinrichtung des Fortbewegungsmittels angezeigt. In Schritt 300 wird eine virtuelle Kugeloberfläche um das Fortbewegungsmittel-Modell dargestellt. In Schritt 400 wird eine Annäherung einer Hand eines Anwenders in einem ersten Annäherungsbereich der Anwenderschnittstelle des Fortbewegungsmittels erfasst und im Ansprechen darauf werden in Schritt 500 Hinweise zu den Zuständen in Form zweidimensionaler Projektionen auf die Kugeloberfläche angezeigt. Durch eine weitere Annäherung des Anwenders in einen zweiten Annäherungsbereich in Schritt 600 wird in Schritt 700 eine Vielzahl dem zweiten Annäherungsbereich zugeordneter Hinweise zu den Zuständen optisch hervorgehoben. In Schritt 800 wird ein kritischer Zustand einer Komponente des Fortbewegungsmittels erkannt und im Ansprechen darauf in Schritt 900 ein der Komponente zugeordneter Hinweis zu dem kritischen Zustand optisch gegenüber anderen Hinweisen hervorgehoben. In Schritt 1000 wird eine Anwendergeste zur Drehung der Darstellung des Fortbewegungsmittel-Modells empfangen und im Ansprechen darauf das Fortbewegungsmittel-Modell in Schritt 1100 gemeinsam mit den bereits angezeigten Bezugslinien und den Hinweisen um einen identischen Winkelbereich gedreht. In Schritt 1200 wird eine Anwendereingabe bezüglich eines der angezeigten Hinweise erfasst und im Ansprechen darauf in Schritt 1300 ein dem Hinweis zugeordnetes Untermenü angezeigt. Hierbei wird ein modifiziertes Fortbewegungsmittel-Modell angezeigt, in welchem dem Hinweis zugeordnete Komponenten gegenüber übrigen Komponenten optisch hervorgehoben werden. Im Ergebnis ermöglicht die vorliegende Erfindung eine besonders intuitive und rasche Art und Weise, Informationen über Zustände von Komponenten eines Fortbewegungsmittels einzusehen und Einfluss auf diese zu nehmen.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anwenderschnittstelle
- 2: Bildschirm
- 3: Infrarot-LED-Leiste
- 4a: zweiter Annäherungsbereich
- 4b: erster Annäherungsbereich
- 5: elektronisches Steuergerät
- 6: Datenspeicher
- 7: Lautsprecher
- 8: Außenspiegel
- 9: Hochachse
- 10: PKW
- 10', 10": Fahrzeugmodell
- 11: Fahrertür
- 12: Frontscheinwerfer
- 13: Rad
- 14: Bezugslinien/Lichtstrahlen
- 15, 16,17,18: Hinweise
- 18': hervorgehobener Hinweis
- 19: Hinweis
- 19': hervorgehobener Hinweis
- 20: virtuelle Kugeloberfläche, Projektionsfläche
- 21: Hinweis
- 21': hervorgehobener Hinweis
- 22: Untermenü
- 23, 24, 25, 26, 27: Schaltflächen
- 28: Sub-Untermenü
- 29, 30, 31, 32: Schaltflächen
- 33a: Soll-Druck
- 33b: Ist-Druck
- 34a: Soll-Druck
- 34b: Ist-Druck
- 35a: Soll-Druck
- 35b: Ist-Druck
- 36a: Soll-Druck
- 36b: Ist-Druck
- 100 bis 1300: Verfahrensschritte

## Patentansprüche

1. Verfahren zur Anzeige von Informationen über Zustände von Komponenten (8, 11, 12, 13) eines Fortbewegungsmittels (10) umfassend:
- Ermitteln (100) von Informationen über Zustände von Komponenten (8, 11, 12, 13) des Fortbewegungsmittels (10),
- Anzeigen (200) eines dreidimensionalen Fortbewegungsmittelmodells (10', 10") des Fortbewegungsmittels (10),
- Anzeigen (500) außerhalb des Fortbewegungsmittelmodells (10', 10") angeordneter Hinweise (15, 16, 17, 18, 19, 21) zu den Informationen,
- Empfangen (1000) einer Anwendergeste zur Drehung der Darstellung des Fortbewegungsmittelmodells (10', 10") und
- Drehen (1100) des Fortbewegungsmittelmodells (10', 10") und der Hinweise (15, 16, 17, 18, 19, 21) um einen identischen Winkelbereich, wobei die Anwendergeste eine Wischgeste umfasst.

2. Verfahren nach Anspruch 1 weiter umfassend
- Anzeigen von Bezugslinien (14) zwischen den Hinweisen (15, 16, 17, 18, 19, 21) und Positionen den Hinweisen (15, 16, 17, 18, 19, 21) jeweils zugeordneter Komponenten (12, 13, 14) innerhalb des Fortbewegungsmittelmodells (10'), und/oder
- Anzeigen der Hinweise (15, 16, 17, 18, 19, 21) auf einer gemeinsamen virtuellen Kugeloberfläche (20), welche das Fortbewegungsmittelmodell (10', 10") umgibt.

3. Verfahren nach Anspruch 2 umfassend die Alternative nach dessen zweitem Spiegelstrich weiter umfassend:
- optisches Hervorheben (300) der gemeinsamen virtuellen Kugeloberfläche (20).

4. Verfahren nach einem der vorstehenden Ansprüche weiter umfassend
- Erfassen (400) einer Annäherung eines Anwenders in einem ersten Annäherungsbereich (4b), und im Ansprechen darauf
- Anzeigen (500) der Hinweise (15, 16, 17, 18, 19, 21) zu den Zuständen.

5. Verfahren nach einem der vorstehenden Ansprüche weiter umfassend
- Erfassen (600) einer Annäherung eines Anwenders in einem zweiten Annäherungsbereich (4a), und im Ansprechen darauf
- optisches Hervorheben (700) dem zweiten Annäherungsbereich (4a) zugeordneter Hinweise (18', 19', 21') zu den Zuständen.

6. Verfahren nach Anspruch 5, wobei der erste Annäherungsbereich (4b) einen größeren Abstand von einer zur Anzeige des Fortbewegungsmittelmodells (10', 10") verwendeten Anzeigeeinrichtung (2) aufweist als der zweite Annäherungsbereich (4a).

7. Verfahren nach einem der vorstehenden Ansprüche, wobei die Hinweise (15, 16, 17, 18, 19, 21) virtuelle 2D-Projektionen auf einer virtuellen Projektionsfläche (20) sind.

8. Verfahren nach einem der vorstehenden Ansprüche weiter umfassend
- Ermitteln (800) kritischer Zustände von Komponenten (12, 13, 14) des Fortbewegungsmittels (10), und im Ansprechen darauf
- Anzeigen (900) und/oder Hervorheben von Hinweisen (15, 16, 17, 18, 19, 21) zu den kritischen Zuständen.

9. Verfahren nach einem der vorstehenden Ansprüche weiter umfassend
- Erfassen (1200) einer Anwendereingabe bezüglich eines der angezeigten Hinweise (15, 16, 17, 18, 19, 21), und im Ansprechen darauf
- Anzeigen (1300) eines dem Hinweis (15, 16, 17, 18, 19, 21) zugeordneten Untermenüs (22), wobei insbesondere ein modifiziertes Fortbewegungsmittelmodell (10") angezeigt wird, in welchem dem Hinweis (15, 16, 17, 18, 19, 21) zugeordnete Komponenten (13) gegenüber übrigen Komponenten (12, 14) optisch hervorgehoben werden.

10. Verfahren nach einem der vorstehenden Ansprüche weiter umfassend
- Anzeigen des Fortbewegungsmittelmodells (10', 10") unter Verwendung eines einem aktuellen Zustand der Komponente (11, 12, 13, 14, 15) zugeordneten Bildmaterials.

11. Verfahren nach einem der vorstehenden Ansprüche, wobei die Komponenten (12, 13, 14)
- einen Reifen und/oder
- eine Traktionsmaschine, und/oder
- ein Leuchtmittel und/oder
- eine Tür, und/oder
- eine Heckklappe und/oder
- eine Seitenscheibe, und/oder
- einen Außenspiegel umfassen, und/oder
wobei die Informationen
- einen Reifendruck, insbesondere einen aktuellen Reifendruck und/oder einen Solldruck, und/oder
- einen Funktionsfehler beschreiben.

12. Anwenderschnittstelle für ein Fortbewegungsmittel (10) umfassend
- eine Anzeigeeinrichtung (2) zur Anzeige von Informationen über Zustände von Komponenten (12, 13, 14) des Fortbewegungsmittels (10)
- eine Erfassungseinrichtung (3) zur Erfassung von Anwendereingaben, und
- eine Auswerteeinheit (5), wobei die Anwenderschnittstelle (1) eingerichtet ist, ein Verfahren nach einem der vorstehenden Ansprüche 1 bis 11 auszuführen.

13. Computerprogrammprodukt umfassend Instruktionen, welche, wenn Sie auf einer Auswerteeinheit (5) einer Anwenderschnittstelle (1) nach Anspruch 12 ausgeführt werden, die Auswerteeinheit (5) veranlassen, die Schritte eines Verfahrens nach einem der Ansprüche 1 bis 11 durchzuführen.

14. Signalfolge umfassend Instruktionen, welche, wenn Sie auf einer Auswerteeinheit (5) einer Anwenderschnittstelle (1) nach Anspruch 12 ausgeführt werden, die Auswerteeinheit (5) veranlassen, die Schritte eines Verfahrens nach einem der Ansprüche 1 bis 11 durchzuführen.

15. Fortbewegungsmittel (10) umfassend eine Anwenderschnittstelle (1) nach Anspruch 12.

## Claims

1. A method for the display of information about the state of components (8, 11, 12, 13) of a means of locomotion (10) comprising:
- Determination (100) of information about states of components (8, 11, 12, 13) of the means of locomotion (10),
- Display (500) of a three-dimensional means of locomotion model (10', 10") of the means of locomotion (10),
- Display (500) of details (15, 16, 17, 18, 19, 21) of the information arranged outside the means of locomotion model (10', 10"),
- Reception (1000) of a user gesture for rotating the display of the means of locomotion model (10', 10") and
- Rotation (1100) of the means of locomotion model (10', 10") and the details (15, 16, 17, 18, 19, 21) about an identical angular range, wherein the user gesture comprises a swipe gesture.

2. A method according to Claim 1 further comprising
- Display of reference lines (14) between components (12, 13, 14) within the means of locomotion model (10') associated in each case with the details (15, 16, 17, 18, 19, 21) and positions of the details (15, 16, 17, 18, 19, 21), and/or
- Display of the details (15, 16, 17, 18, 19, 21) on a common virtual spherical surface (20), which surrounds the means of locomotion model (10', 10").

3. A method according to Claim 2 comprising the alternative after its second indent further comprising:
- optical highlighting (300) of the common virtual spherical surface (20).

4. A method according to any one of the preceding claims further comprising
- Detection (400) of an approach of the user in a first approach region (4b), and in response thereto
- Display (500) of the details (15, 16, 17, 18, 19, 21) on the states.

5. A method according to any one of the preceding claims further comprising
- Detection (600) of an approach of a user in a second approach region (4a), and in response thereto
- optical highlighting (700) of details (18', 19', 21') on the states associated with the second approach region (4a).

6. A method according to Claim 5, wherein the first approach region (4b) has a greater distance from a display device (2) used for displaying the means of locomotion model (10', 10") than the second approach region (4a).

7. A method according to any one of the preceding claims, wherein the details (15, 16, 17, 18, 19, 21) are virtual 2D projections on a virtual projection surface (20).

8. A method according to any one of the preceding claims further comprising
- Determination (800) of critical states of components (12, 13, 14) of the means of locomotion (10), and in response thereto
- Display (900) and/or highlighting of details (15, 16, 17, 18, 19, 21) on the critical states.

9. A method according to any one of the preceding claims further comprising
- Detection (1200) of a user input with regard to one of the displayed details (15, 16, 17, 18, 19, 21), and in response thereto
- Display (1300) of a sub-menu (22) associated with the detail (15, 16, 17, 18, 19, 21), wherein in particular a modified means of locomotion model (10") is displayed, in which components (13) associated with the detail (15, 16, 17, 18, 19, 21) are optically highlighted relative to the remaining components (12, 14).

10. A method according to any one of the preceding claims further comprising
- Display of the means of locomotion model (10', 10") using an image material associated with a current state of the component (11, 12, 13, 14, 15).

11. A method according to any one of the preceding claims, wherein the components (12, 13, 14) comprise
- a tire and/or
- a traction machine, and/or
- an illuminant and/or
- a door, and/or
- a rear flap and/or
- a side window pane, and/or
- an external mirror, and/or
wherein the information describes
- a tire pressure, in particular a current tire pressure and/or a target pressure, and/or
- a malfunction.

12. A user interface for a means of locomotion (10) comprising
- a display device (2) for the display of information about states of components (12, 13, 14) of the means of locomotion (10)
- a detection device (3) for detecting user inputs, and
- an evaluation unit (5), wherein the user interface (1) is configured to carry out a method according to any one of the preceding claims 1 to 11.

13. A computer program product comprising instructions, which, if they are carried out on an evaluation unit (5) of a user interface (1) according to Claim 12, cause the evaluation unit (5) to implement the steps of a method according to any one of Claims 1 to 11.

14. A signal sequence comprising instructions,
which, if they are carried out on an evaluation unit (5) of a user interface (1) according to Claim 12, cause the evaluation unit (5) to implement the steps of a method according to any one of Claims 1 to 11.

15. A means of locomotion (10), comprising a user interface (1) according to Claim 12.

## Revendications

1. Procédé d'affichage d'informations concernant des états de composants (8, 11, 12, 13), d'un moyen de transport (10), comprenant :
- la détermination (100) d'informations concernant des états de composants (8, 11, 12, 13) du moyen de transport (10),
- l'affichage (200) d'un modèle tridimensionnel de moyen de transport (10', 10") du moyen de transport (10),
- l'affichage (500) d'indications, disposées à l'extérieur du modèle tridimensionnel de moyen de transport (10', 10"), concernant les informations,
- la réception (1000) d'un geste d'utilisateur pour la rotation de la représentation du modèle tridimensionnel de moyen de transport (10', 10") et
- la rotation (1100) du modèle tridimensionnel de moyen de transport (10', 10") et des indications (15, 16, 17, 18, 19, 21) d'une plage angulaire identique, le geste d'utilisateur comprenant un geste d'effleurement.

2. Procédé selon la revendication 1, comprenant en outre :
- l'affichage de lignes de référence (14) entre les indications (15, 16, 17, 18, 19, 21) et les positions des composants (12, 13, 14) correspondant aux indications (15, 16, 17, 18, 19, 21) à l'intérieur du modèle tridimensionnel de moyen de transport (10') et/ou
- l'affichage des indications (15, 16, 17, 18, 19, 21) sur une surface sphérique virtuelle commune (20) qui entoure le modèle tridimensionnel de moyen de transport (10', 10").

3. Procédé selon la revendication 2, comprenant l'alternative selon le deuxième tiret, comprenant en outre :
- la mise en relief optique (300) de la surface sphérique virtuelle commune (20).

4. Procédé selon l'une des revendications précédentes, comprenant en outre :
- la détection (400) d'une approche d'un utilisateur dans une première zone d'approche (4b) et, en réaction,
- l'affichage (500) des indications (15, 16, 17, 18, 19, 21) concernant les états.

5. Procédé selon l'une des revendications précédentes, comprenant en outre :
- la détection (600) d'une approche d'un utilisateur dans une deuxième zone d'approche (4a) et, en réaction,
- la mise en relief optique (700) des indications (18', 19', 21') concernant les états correspondant à la deuxième zone d'approche (4a).

6. Procédé selon la revendication 5, la première zone d'approche (4b) présente une distance par rapport à un dispositif d'affichage (2) utilisé pour l'affichage du modèle tridimensionnel de moyen de transport (10', 10") plus importante que la deuxième zone d'approche (4a).

7. Procédé selon l'une des revendications précédentes, les indications (15, 16, 17, 18, 19, 21) étant les projections virtuelles bidimensionnelles sur une surface de projection virtuelle (20).

8. Procédé selon l'une des revendications précédentes, comprenant en outre :
- la détermination (800) d'états critiques des composants (12, 13, 14) du moyen de transport (10) et, en réaction,
- l'affichage (900) et/ou la mise en relief des indications (15, 16, 17, 18, 19, 21) concernant les états critiques.

9. Procédé selon l'une des revendications précédentes, comprenant en outre :
- la détection (1200) d'une entrée d'utilisateur concernant une des indications (15, 16, 17, 18, 19, 21) affichées et, en réaction,
- l'affichage (1300) d'un sous-menu (22) correspondant à l'indication (15, 16, 17, 18, 19, 21), plus particulièrement un modèle tridimensionnel de moyen de transport (10") modifié étant affiché, dans lequel les composants (13) correspondant à l'indication (15, 16, 17, 18, 19, 21) sont mise en relief visuellement par rapport aux autres composants (12, 14).

10. Procédé selon l'une des revendications précédentes, comprenant en outre :
- l'affichage du modèle tridimensionnel de moyen de transport (10', 10") à l'aide d'images correspondant à un état actuel du composant (11, 12, 13, 14, 15).

11. Procédé selon l'une des revendications précédentes, les composants (12, 13, 14) comprenant :
- un pneu et/ou
- une machine de traction et/ou
- un moyen d'éclairage et/ou
- une porte et/ou
- un hayon et/ou
- une vitre latérale et/ou
- un rétroviseur extérieur et/ou
les informations décrivant :
- une pression de pneu, plus particulièrement une pression de pneu actuelle et/ou une pression de consigne et/ou
- une erreur de fonctionnement.

12. Interface utilisateur pour un moyen de transport (10) comprenant :
- un dispositif d'affichage (2) pour l'affichage d'informations concernant les états de composants (12, 13, 14) du moyen de transport (10)
- le dispositif de détection (3) pour la détection d'entrées d'utilisateurs et
- une unité d'analyse (5), l'interface utilisateur (1) étant conçue pour exécuter un procédé selon l'une des revendications 1 à 11.

13. Produit de programme informatique comprenant des instructions qui, lorsqu'elles sont exécutées sur une unité d'analyse (5) d'une interface utilisateur (1) selon la revendication 12, font en sorte que l'unité d'analyse (5) effectue les étapes d'un procédé selon l'une des revendications 1 à 11.

14. Série de signaux comprenant des instructions qui, lorsqu'elles sont exécutées sur une interface utilisateur (1) selon la revendication 12, font en sorte que l'unité d'analyse (5) effectue les étapes d'un procédé selon l'une des revendications 1 à 11.

15. Moyen de transport (10) comprenant une interface utilisateur (1) selon la revendication 12.
